# EUROPÄISCHE PATENTANMELDUNG

(11) **EP 2 818 959 A2**
(43) Veröffentlichungstag der Anmeldung: **31.12.2014**
(21) Anmeldenummer: 14172403.9
(22) Anmeldetag: 13.06.2014
(51) Int. Cl.: G05D 7/01

(54) **Steuer- und/oder Regelsystem sowie Verfahren für den Auftrag viskoser Flüssigkeiten auf ein Substrat**

(30) Priorität: 18.06.2013 DE 102013106298
(71) Anmelder: Baumer hhs GmbH, 47829 Krefeld (DE)
(72) Erfinder: Skicki, Achim, 42781 Haan (DE)
(74) Vertreter: Kluin, Jörg-Eden

(57) **Zusammenfassung**

Steuer- und/oder Regelsystem für den Auftrag viskoser Flüssigkeiten auf ein Substrat mit mindestens einem Auftragsventil (1), mit einem Verschlussorgan (6), das einen Arbeitshub (A) zwischen einer Nullposition und einer Arbeitsposition vollzieht, der über eine Hubjustierung (2) veränderbar ist, wobei ein Stellmotor (3) vorgesehen ist, zur motorischen Einstellung dieser Hubjustierung (2).

## Beschreibung

Die Erfindung betrifft ein Steuer- und/oder Regelsystem für den Auftrag viskoser Flüssigkeiten, sowie ein Verfahren zur Steuerung und/oder Regelung dieses Auftrags.

Derartige Systeme und Verfahren sind bereits bekannt. Nachteilig an bekannten Systemen und Verfahren ist, dass sie nicht in wünschenswertem Maße für einen Auftrag sorgen, der in sehr engen Grenzen konstant bleibt, dass sie keinen wünschenswerten Schutz gegen Fehlbedienung bereitstellen, ihre präzise Funktionalität nicht unter allen Umständen gewährleistet ist oder dass sie einen großen Aufwand erfordern, um ihr präzises Funktionieren aufrecht zu erhalten.

Die Erfindung hat es sich zur Aufgabe gemacht, ein System und ein Verfahren zu schaffen, welches zumindest hinsichtlich eines der genannten Nachteile verbessert ist.

Diese Aufgabe wird durch das in Anspruch 1 wiedergegebene Steuer- und/oder Regelsystem und das in Anspruch 10 wiedergegebene Verfahren gelöst.

Das erfindungsgemäße Steuer- und/oder Regelsystem für den Auftrag viskoser Flüssigkeiten auf ein Substrat umfasst mindestens ein Auftragsventil. Dieses Auftragsventil weist ein Verschlussorgan auf. Dieses Verschlussorgan vollzieht einen Arbeitshub zwischen einer Nullposition und einer Arbeitsposition. Das Ventil weist eine Hubjustierung auf, mittels der der Arbeitshub veränderbar ist. Es ist ein Stellmotor vorgesehen, zur motorischen Einstellung der Hubjustierung.

Mit dem Begriff "Arbeitshub" ist insbesondere der Weg gemeint, den das Verschlussorgan des Ventils zwischen den beiden Endpositionen Nullposition und Arbeitsposition zurücklegt.

Mit dem Begriff "Hubjustierung" ist im Rahmen dieser Druckschrift insbesondere ein Bauelement oder eine Baugruppe bezeichnet, die den Arbeitshub begrenzt. Die Hubjustierung kann auch als Hubeinstellung oder Hubregulierung bezeichnet werden. Bevorzugt handelt es sich bei der Hubjustierung selbst jedoch um keine Regelung im engeren Sinne.

Die Einstellung der Hubjustierung kann auch als Positionssteuerung der Hubjustierung bezeichnet werden.

Das Verschlussorgan vollzieht zwischen Nullposition und Arbeitsposition bevorzugt eine translatorische Bewegung.

Bevorzugt ist über die Hubjustierung die Arbeitsposition des Verschlussorgans einstellbar, indem die Hubjustierung einen Anschlag für das Verschlussorgan in seiner Arbeitsposition bereitstellt. Die Nullposition, die auch als Schließstellung bezeichnet werden kann, ist bevorzugt durch die Düsengeometrie des Ventils vorgegeben.

Die Erfindung kann sich unter anderem allgemein beziehen auf Verpackungen, Versandtaschen, Briefumschläge, Sackherstellung und Beschichtungen, die mit einer Auftragsleiste erfolgen, die von mehreren, unabhängig wirkenden Klebstoffventilen gespeist wird. Bei dem Substrat kann es sich also um Verpackungen, Versandtaschen, Briefumschläge und Säcke handeln. Und es können mehrere Ventile nebeneinander vorgesehen sein, die zu einer Auftragsleise zusammengefasst sind.

Das Verschlussorgan umfasst bevorzugt einen Anker mit an der Spitze angeordneter Nadel, bevorzugt Kugelnadel.

Die Funktion der Hubregulierung besteht also insbesondere darin, den gewünschten Arbeitshub des Verschlussorgans am Ventil einzustellen. Dieser Arbeitshub soll bevorzugt einerseits den gewünschten Durchfluss im Ventil im Nadelsitz regulieren, andererseits aber auch eine ordnungsgemäße Funktion des Ventils sicherstellen. Bei elektromagnetisch betätigten Auftragsventilen ist der Luftspalt zwischen Anker und Hubregulierung gleichzeitig der "Luftspalt" des Magneten. Je größer dieser Luftspalt ist, desto größer muss die Öffnungskraft sein, um das Ventil sicher zu öffnen. Der Hubregulierung kommen bevorzugt weitere Funktionen zu: Sie dient vorzugsweise dem Abgleichen von Ventilen untereinander, um etwa gleiches Schaltverhalten und Durchflüsse zu erreichen (auch etwa für die Positioniergenauigkeit und den Toleranzausgleich). Unterschiedliche Raupenbreiten aber auch Punktgrößen, die sich je nach Betriebsart ergeben können, sind auf diese Weise bevorzugt angleichbar. Ein übermäßiger Verschleiß durch unnötig hohe Arbeitshübe ist bevorzugt vermeidbar. Bevorzugt ist der Verschleiß in der Düse durch Einschlagen der Ventilnadel im Nadelsitz durch Nachstellen des Arbeitshubes kompensierbar.

Bei dem Ventil kann es sich beispielsweise um ein elektrisch oder pneumatisch wirkendes Auftragsventil handeln.

Die viskose Flüssigkeit kann, ohne hierauf beschränkt zu sein, Klebstoffe, etwa Heiß- und Kaltleim umfassen, sowie Lacke, Dicht- oder Schmierstoffe.

Der Stellmotor ist bevorzugt elektrisch angetrieben. Es kann sich um einen Schrittmotor mit oder ohne einem zwischengeschalteten Getriebe handeln (z. B. winkelschrittgesteuerter Motor). Der Motor kann verschiedene Getriebeformen umfassen, beispielhaft sei ein Planetengetriebe genannt. Es kann sich um einen bürsten- oder bürstenlosen Elektromotor handeln, der Positionsgeber mit oder ohne zwischengeschaltetem Getriebe aufweisen kann. Der Elektromotor kann ein Gleichstrom-, Wechselstrom- oder Drehstrommotor sein. Es kann sich um einen Linearmotor mit oder ohne Positionsgeber handeln. Mit einem "Linearmotor" wird im Rahmen dieser Druckschrift ein Motor bezeichnet, der die von ihm getriebenen Objekte nicht in eine drehende Bewegung versetzt, sondern sie auf geradlinigen oder gekurvten Bahnen schiebt (Translationsbewegung). Auch Antriebe, bei denen der Läufer sich dreht, aber nur zum Teil vom Stator umgeben ist, sind gemeint. Ebenso wie Linearaktuatoren, wie etwa Elektromagneten oder Schwingspulen, deren Prinzip keine beliebige Verlängerung der Bewegung zulässt.

Durch den Stellmotor ist eine Voraussetzung für eine bevorzugte Ausführungsform geschaffen, in der der Arbeitshub des Ventils fernsteuerbar und/oder aus der Ferne regelbar ist.

Mit Vorteil ist eine Steuereinrichtung des Stellmotors der Hubjustierung vorgesehen. Positionsgeber des Stellmotors können Potentiometer, Drehwinkelgeber oder Hall-Sensoren oder jede andere Form eines geeigneten Positionsgebers sein. Die Begriffe "Positionsgeber", "Motorsteuerung" und "Steuereinrichtung des Stellmotors" werden im Rahmen dieser Druckschrift synonym verwendet. Mit ihnen sind insbesondere Ansteuerungen des Stellmotors bezeichnet, für die auch die Begriffe "Motor Controller", "Fahrtenregler" oder "Regler" gebräuchlich sind.

Die Motorsteuerung kann eine Software umfassen.

Neben der vorzugsweise vorgesehenen Motorsteuerung ist zudem bevorzugt eine übergeordnete Steuerung des Systems vorgesehen. Mit Vorteil ist eine Einstellung der Hubjustierung durch die Steuereinrichtung des Stellmotors der Hubjustierung aufgrund eines Positionierbefehls der übergeordneten Steuerung ausführbar. Mit Vorteil umfasst die übergeordnete Steuerung des Systems eine aus dem Stand der Technik bekannte Steuerung zur Ansteuerung des mindestens einen Auftragsventils, mit der insbesondere die Öffnungszeit des Ventils steuerbar ist. Die übergeordnete Steuerung des Systems weist bevorzugt ein Bedienterminal auf, das auch als Bedieneingabe bezeichnet werden kann. Der Benutzer kann bevorzugt an der Bedieneingabe der übergeordneten Steuerung des Systems eine Eingabe machen oder über Funktionstasten (z. B. Plus-/Minustasten) den mindestens einen Motor ansteuern. Ziel ist es vorzugsweise, über den mindestens einen Motor die Hubregulierung auf- und zuzudrehen und damit die aufgetragene Klebstoffmenge zu beeinflussen. Auf diese Weise ist es dem Bediener bevorzugt möglich, alle zentralen Stellbefehle eines Ventils (vorzugsweise Öffnungszeit und/oder Klebstoffauftragsmuster und/oder Klebstoffauftragsmenge) von einem Bedienort zu beeinflussen. Hierfür ist es bevorzugt nicht mehr erforderlich, dass sich der Bediener, etwa für die manuelle Verstellung der Hubregulierung, an den Montageort des mindestens einen Ventils bewegen muss. In einer Ausführungsform ist eine Mehrzahl von Ventilen vorgesehen. Insbesondere in dieser Ausführungsform kann dadurch, dass sich der Nutzer nicht mehr an den Ort der Ventile bewegen muss, erhebliche Zeit eingespart werden. Ein weiterer Vorteil der bevorzugten Ausführungsform, in der eine Fernverstellung der Hubregulierung über den mindestens einen Stellmotor möglich ist, ist, dass im Stand der Technik, bei einer ungünstigen Position des mindestens einen Ventils, für eine manuelle Verstellung der Hubregulierung aus Sicherheitserwägungen die übergeordnete Maschine gestoppt werden muss. Durch die bevorzugte Fernverstellbarkeit ist dagegen bevorzugt eine Verstellung bei laufender Produktion jederzeit und unter allen Umständen möglich. Damit wird die Produktivität gesteigert und die Ausschussrate in vielen Fällen gesenkt. Denn je nach Maschinentyp ist auch ein Anlauf einer Maschine mit Ausschuss verbunden. Auf jeden Fall wird hierdurch die Personensicherheit gesteigert.

Die übergeordnete Steuerung des Systems umfasst bevorzugt eine Software.

Mit Vorteil ist eine Arbeitshub-Kalibrierfunktion vorgesehen. Bei dieser ist der Stellmotor bevorzugt in eine Richtung bis an eine Endposition fahrbar, in der das Verschlussorgan in der Nullposition ist, das Ventil also geschlossen und verriegelt ist. Von dieser Position ist der Stellmotor daraufhin bevorzugt ein definiertes Stück in die entgegengesetzte Richtung fahrbar.

Bevorzugt ist mit genau einem Befehl die Kalibrierung aller Ventile auslösbar.

Der Einsatz eines Stellmotors, insbesondere Elektromotors, ermöglicht die, bevorzugt vorgesehene, selbsttätige oder auf Benutzungsanforderung hin ausgelöste Kalibrierung des Arbeitshubs. Dabei fährt der Stellmotor bevorzugt bis an einen Anschlag, insbesondere, bis das Verschlussorgan an die Düsenöffnung innen anschlägt (Nullposition). Über einen Anstieg der Stromaufnahme und/oder des Drehmoments ist von der Steuerung bevorzugt feststellbar, dass der Anschlag erreicht ist. Von dort ist der Motor bevorzugt ein definiertes Stück, insbesondere eine definierte Anzahl von Schritten oder einen bestimmten Drehwinkel, in die entgegengesetzte Richtung fahrbar. Es ist denkbar, dass der Motor von der dann erreichten Position erneut ein definiertes Stück in Richtung des Anschlags fahrbar ist, um das Gewindespiel zu kompensieren.

Hierdurch ist gewährleistet, dass, wie in einer Ausführungsform, alle Ventile, die an einer Steuerung angeschlossen sind, gemäß einer Sollvorgabe eine konstante Leimmenge auftragen. Zusätzlich wird die Gleichmäßigkeit der Einstellungen gesichert, da unterschiedliches menschliches Empfinden bei der Einstellung ausgeschlossen wird. Es wird hierdurch das Problem beseitigt, dass die Hubregulierung, wie bislang üblich, durch den Nutzer von Hand eingestellt wird. Hierzu wurde die Hubregulierung von Hand bis zum Anschlag zugedreht. Idealerweise geschah dies mit einem Drehmomentschlüssel, erfolgte in der Praxis oftmals jedoch nicht. Dies hatte zur Folge, dass die Einstellung von dem persönlichen Empfinden und der angewendeten Kraft abhängig war. Trotz nominal gleicher Öffnung der Ventile (z. B. eine halbe Umdrehung von der Nullposition bzw. dem Anschlag) konnte die Einstellung unterschiedlich sein, da die Nullposition bzw. der Ausgangspunkt von unterschiedlichen Nutzern unterschiedlich gewählt werden konnte. Häufig erfolgte zudem eine Nachjustierung von Ventilen nicht, da diese oft tief in Maschinen integriert sind. Die Zugänglichkeit ist nicht immer gegeben. Auch aus Gründen der Sicherheit sollte eine Korrektur während des Laufs der Maschine bisher nicht erfolgen, da Körper- oder Bekleidungsteile des Bedieners durch die laufende Maschine erfasst werden konnten.

Die Kalibrierung kann automatisch ausführbar sein, zyklisch oder wenn eine Pause erkannt wird oder sie kann per Benutzerbefehl der Steuerung anzeigbar sein. Mit einer automatischen Kalibrierung zur Produktionsbeginn oder in Pausen wird verhindert, dass diese Einstellung "vergessen" wird. Die Konstanz und Reproduzierbarkeit einer jeden Produktion wird dadurch gesteigert.

Mit Vorteil ist eine dem Auftrag nachgeschaltete Qualitätssicherungseinrichtung (z. B. Sensoren, Kamera mit Bildverarbeitung) vorgesehen.

Die Kalibrierung kann auch startbar sein, wenn eine dem Auftrag nachgeschaltete Qualitätssicherungseinrichtung eine Abweichung über einen vorzugsweise vorgebbaren Toleranzwert hinaus verstellt. Eine Kalibrierung während einer laufenden Produktionsmaschine würde Ausschuss produzieren. Mit Vorteil ist bei einem Kalibrierungsbedarf die übergeordnete Maschine stoppbar oder die Zufuhr neuer Produkte verhinderbar, bis die Kalibrierung vollzogen ist.

Alternativ kann während des Kalibrierungsvorgangs eine Ausschleusvorrichtung ansteuerbar sein, die automatisch Produkte aus dem Produktionsfluss ausschleust. In diesem Fall muss die Produktion nicht unterbrochen werden.

Mit Vorteil ist in der übergeordneten Steuerung für jedes Ventil ein individueller Wert für den Arbeitshub hinterlegbar. Dies macht unter anderem in einer Ausführungsform Sinn, in der die Auftragsmenge eines Ventils von der Auftragsmenge eines anderen Ventils abweicht, von den Ventilen also unterschiedliche Klebstoffmengen aufgetragen werden sollen. Zudem können mechanische und fertigungstechnische Toleranzen zwischen den Ventilen hierdurch ausgeglichen werden. Jedes Ventil ist bevorzugt nach einer Nullstellung (Anschlag) auf eine, vorzugsweise in der übergeordneten Steuerung hinterlegbare, hinterlegte Sollposition fahrbar.

In einer bevorzugten Ausführungsform sind diese Daten in einem Produktionsauftrag hinterlegbar und sind, etwa bei einem Wiederholauftrag, aus einem Datensatz wieder ladbar. Auf diese Weise können auch individuelle, auftragsbezogene Daten wieder reproduziert werden.

Mit Vorteil sind für jedes Ventil, insbesondere in der Software, etwa der übergeordneten Steuerung des Systems, für unterschiedliche Substratbereiche unterschiedliche Werte für den Arbeitshub hinterlegbar. Es können also bevorzugt in der Software pro Ventil bestimmte Bereiche des Substrats mit unterschiedlichen Auftragsmengen anlegbar sein. Dadurch wäre es zum Beispiel in einem Punktbetrieb abschnittsweise möglich, unterschiedliche Punktgrößen aufzutragen. Eine mögliche Anwendung wäre zum Beispiel, in einer Laschenmitte mehr aufzutragen, als am Laschenrand, um ein Herausquellen von Klebstoff zu vermeiden.

Mit Vorteil ist eine Reinigungsfunktion vorsehbar, bei der die Hubjustierung durch ihren Stellmotor mindestens einmal geöffnet und geschlossen werden kann. Es hat sich gezeigt, dass ein einmaliges bzw. mehrmaliges Öffnen und Schließen der Hubregulierung auch hartnäckige Verschmutzungen löst. Dieses einmalige oder mehrmalige Verfahren ist bevorzugt über die Steuerung, insbesondere der übergeordneten Steuerung des Systems, für einzelne Ventile, Ventilgruppen oder alle Ventile per Bedienereinheit auslösbar. In einer Ausführungsform weist das Ventil einen internen Sensor (z.B. einen Durchflusssensor) auf. Die Reinigung kann auch automatisch startbar sein, wenn ein ventilinterner Sensor oder eine externe Überwachungseinrichtung (etwa eine Kamera oder ein ULT- bzw. HLT Sensor) eine Abweichung erkennt. Die Reinigungsfunktion kann mit einem Spülvorgang kombinierbar sein, um gelöste Teile aus dem Ventil herauszuspülen.

Nach dem Reinigungsprogramm ist bevorzugt ein Testauftrag durchführbar, um den Erfolg zu prüfen. Ist der Erfolg nicht ausreichend, so ist der Reinigungsvorgang bevorzugt wiederholbar.

Die Überprüfung des Durchflusses kann auch gravimetrisch durchführbar sein, indem z. B. in ein Dosiergefäß dosierbar ist, das mit einer Präzisionswaage verbunden ist.

Bevorzugt ist die Stellung des Stellmotors und damit die Stellung der Hubjustierung, besonders bevorzugt an der übergeordneten Steuerung des Systems, ablesbar. Es sind also bevorzugt Mittel vorgesehen, die diese Stellung auf eine Anzeige übertragen.

Mit Vorteil ist eine Verschleißüberwachungs-Funktion vorgesehen. Bei dieser ist, bevorzugt nach einem Neueinbau oder einer Überholung des mindestens einen Ventils, die letzte Arbeitsposition und/oder Nullposition in einer Steuerung speicherbar. Durch die Veränderung der Lagen ist ein entstandener Verschleiß bei einer Neukalibrierung abschätzbar. Hieraus sind bevorzugt Kennwerte für den Verschleiß bestimmbar. Es kann möglich sein, dass bei einer Überschreitung bestimmter Grenzwerte der Bediener auf eine notwendige Wartung hingewiesen wird. Der Benutzer kann beispielsweise bevorzugt bei einem Austausch von Düse und Anker die Verschleißüberwachung wieder neu starten, zum Beispiel durch Benutzereingabe an dem Bediengerät der Steuerung, insbesondere der übergeordneten Steuerung des Systems ("Nullung"). Es ist denkbar, dass durch die Steuerung durch die Veränderung der Kennwerte in die andere Richtung automatisch erkennbar ist, dass eine Wartung vorgenommen wurde. Die neuen Werte können automatisch als Ausgangswert annehmbar sein.

Beispielsweise kann in der Ausführungsform, in der der Auftrag durch ein im Ventil angeordneten Sensor etwa einem Durchflusssensor oder eine externe Überwachungseinrichtung, etwa einer Kamera, kontrollierbar ist, die Hubjustierung, nicht, wie in einer anderen Ausführungsform, auf einen bestimmten Wert eingestellt werden, etwa durch die Arbeitshub-Kalibrierfunktion, sondern die Hubjustierung kann in Abhängigkeit der Auftragskontrolle erfolgen. Gräbt sich beispielsweise die Ventilnadel durch Verschleiß weiter in den Düsensitz ein, dann kann die Hubjustierung automatisch so nachgestellt werden, dass ein gleich bleibender Auftrag erfolgt. Die Stellung der Hubjustierung ist also bevorzugt als Verschleißindikator nutzbar.

Die Toleranz zwischen Düse und Anker bzw. Düse und Nadel kann bei dem Stellmotor prüfbar sein. Diese kann beispielsweise 1100 µsec. betragen.

In der bevorzugten Ausführungsform, in der eine Bediensoftware vorgesehen ist, ist in der Bediensoftware für mehrere Ventiltypen jeweils die optimale Arbeitsposition hinterlegbar. Durch Auswahl des Ventiltyps an der Bediensoftware ist bevorzugt die optimale Arbeitsposition dieses Ventiltyps anfahrbar. Die optimale Arbeitsposition kann je nach Ventiltyp unterschiedlich sein. Arbeitet beispielsweise ein Ventiltyp bei einer Hubregulierung von ein viertel Umdrehung optimal, so benötigt ein anderes Ventil eine Öffnung von einer halben Umdrehung. Durch Auswahl des Ventiltyps an der Bediensoftware ist bevorzugt automatisch die optimale Arbeitsposition anfahrbar. Wenn das Auftragsventil, wie bevorzugt, einen Identifikationschip aufweist, so kann dies auch ohne Benutzereingabe, wie bevorzugt, voll automatisch erfolgen. Damit ist durch einfaches um- bzw. einstecken des Ventils an die Steuerung die optimale Position anfahrbar.

In der bevorzugten Ausführungsform, in der eine Bediensoftware vorgesehen ist (insbesondere für die übergeordnete Steuerung des Systems), ist in der Bediensoftware für mehrere Ventiltypen bevorzugt jeweils eine Untergrenze für die Arbeitsposition hinterlegbar. Alternativ kann für alle Ventiltypen genau eine Untergrenze für die Arbeitsposition hinterlegbar sein. Bevorzugt sind Mittel vorgesehen, die das Unterschreiten dieser Grenze verhindern. Mit "Untergrenze" für die Arbeitsposition ist im Rahmen dieser Druckschrift insbesondere die Position der Hubjustierung gemeint, die den kleinsten sinnvoll möglichen Arbeitshub bewirkt. Ähnlich wie es eine optimale Arbeitsposition gibt, *kann* es eine untere Arbeitsposition *geben,* die nicht unterschritten werden sollte, da unterhalb dieser Einstellung die Ventile nicht mehr stabil arbeiten. Bei einer manuellen Einstellung kann nicht verhindert werden, dass die Hubregulierung so eingestellt wird, dass das Ventil in den kritischen Bereich gelangt. In der bevorzugten Ausführungsform, in der eine Bediensoftware vorgesehen ist, kann diese dagegen, wie bevorzugt, verriegelt werden, so dass diese kritischen Einstellungen nicht anfahrbar sind (beispielsweise können die Eingabefelder-Tasten inaktiv gesetzt werden, wenn die untere Grenze erreicht wird, nur die Bewegung zur größeren Öffnung wird dann zugelassen). Diese untere Grenze kann für alle Ventile gleich oder alternativ ventiltypbezogen gesetzt werden.

Mit Vorteil ist ein Regelkreis zur Regelung des Auftrags vorgesehen und das System weist Sensoren zur Überwachung des Auftrags auf. Die Stellung der Hubjustierung ist bevorzugt eine Stellgröße des Regelkreises zur Regelung des Auftrags, in einer Ausführungsform die einzige.

Verglichen mit einer ebenfalls denkbaren Regelung, bei der die Ansteuerzeiten der Ventile als Stellgrößen für die Auftragsregelung herangezogen werden, ergibt sich der Vorteil, dass Einschränkungen entfallen, die bei dem Heranziehen der Ansteuerzeiten der Ventile als Stellgrößen bestehen. So ist das Heranziehen der Ansteuerzeiten der Ventile nicht geeignet, wenn Verschmutzungen oder übermäßiger Verschleiß vorliegen. Auch existieren Mindestansteuerzeiten, die nicht unterschritten werden können, da ansonsten die Hubbewegungen des Verschlussorgans nicht oder nur verzögert ausgelöst wird. Für ein sicheres Arbeiten muss die einwirkende Kraft (z.B. ein Magnetfeld bei einem elektrischen Ventil) eine Mindestzeit anstehen, ansonsten ist ein reproduzierbares Öffnen des Ventils nicht möglich.

Es hat sich gezeigt, dass sich im Laufe des Produktionsprozesses die an den Auftragsventilen (insbesondere Klebstoffauftragsventilen) eingestellte, während des Ventilöffnungszyklus sich ergebende Auftragsgröße ungewollt verändert, wenn hiergegen nichts unternommen wird. Die Ursachen der Veränderung können vielfältig sein. In der Ausführungsform, in der die aufgetragene viskose Flüssigkeit Klebstoff umfasst, ist bekannt, dass die Viskosität fast aller Klebstofftypen sich mit steigender Temperatur erniedrigt. Bei einer konstanten Öffnungszeit tritt dann eine ungewohnt große Klebstoffmenge aus. Neben dem höheren Leimverbrauch und den damit verbundenen Kosten, kann die erhöhte Leimmenge auch unangenehme Störungen im Abpackprozess erzeugen. Der überschüssige Klebstoff könnte aus dem Klebespalt heraustreten, Verpackungen miteinander verkleben und/oder die Maschine verschmutzen. Zusätzlich kann zu viel Leim zu ästhetischen Einschränkungen der Verpackung führen.

In der Ausführungsform, in der das Ventil ein Verschlussorgan umfasst, welches seinerseits einen Anker mit Nadel (etwa Kugelnadel) umfasst, schlägt dieses bei dem Verschluss des Ventils meist auf den Düsensitz ein. Gerade bei hochfrequenten Anwendungen verschleißt der Düsensitz meist relativ schnell, sodass sich die geometrischen Dimensionen des Düsensitzes verändern. Allein hierdurch kann sich die Durchflussmenge verändern. Zudem kann sich hierdurch der Arbeitshub des Ventils verändern, obwohl die Hubjustierung unverändert bleibt, wenn sich das Verschlussorgan immer tiefer in den Düsensitz "eingräbt". Hierdurch können sich auch die Öffnungszeiten und damit die Leimauftragsmenge verändern.

Die Begriffe "Düsensitz" und "Nadelsitz" werden im Rahmen dieser Druckschrift synonym verwendet.

Eine weitere Ursache für die sich verändernde Leimmengen können Verschmutzungen im Düsenbereich sein. Kleinere und größere Verschmutzungen können den Durchfluss der viskosen Flüssigkeit verändern. Außerdem können klebrige Reste im Düsenbereich dazu führen, dass sich das Verschlussorgan aufgrund der Anhaftung erst später aus der Düse löst und sich damit die Öffnungszeiten verändern, was wiederum den Leimauftrag verändert. Häufig lassen sich solche hartnäckigen Verschmutzungen mit einem einfachen Spülen des Ventils nicht lösen, sondern müssen mit Kraft gelöst werden. Zu wenig Klebstoff kann dazu führen, dass die Haltekraft der Fügestelle unzureichend ist.

Es hat sich daher gezeigt, dass im Produktionsbetrieb nie davon auszugehen ist, dass die aufgetragene Leimauftragsmenge ohne weiteres in engen Grenzen konstant bleibt. Sie kann sich je nach Ursache in beide Richtungen entwickeln (zu wenig/zu viel Auftrag).

Durch das Vorsehen des Regelkreises zur Regelung des Auftrags können derartige Veränderungen heraus regelbar sein. Ist eine Sollvorgabe für einen Auftrag der viskosen Flüssigkeit gesetzt, so kann dieser Auftrag mit einer Überwachungsvorrichtung erfasst und bei Abweichungen unter- oder oberhalb eines vorgegebenen Sollwertes über die Regelung nachführbar sein. Über die Motoreinstellung des Stellmotors ist die Auftragsmenge bevorzugt so lange nachführbar, bis die gewünschte Auftragsmenge erreicht wird. Dies kann iterativ erfolgen oder über eine Berechnungsvorschrift/Kennlinie. Die Sollvorgabe muss nicht zwangsläufig eine Menge sein, sondern kann auch eine Flächenangabe sein. Denn häufig ist eine Flächenangabe, die leichter zu ermitteln ist, sehr eng korreliert mit der Menge. Es ist denkbar, dass in dem Regelkreis zur Regelung des Auftrags mehrere Stellglieder vorgesehen sind. Zusätzlich zur Stellung der Hubjustierung als Stellgröße, kann beispielsweise auch die Viskosität der Auftragsflüssigkeit und/oder der Druck der Auftragsflüssigkeit und/oder die Öffnungszeit des Ventils eine veränderbare Stellgröße des Regelkreises zur Regelung des Auftrags sein.

Mit Vorteil ist in dem Ventil mindestens ein Temperatursensor vorgesehen, der die Temperatur der viskosen Flüssigkeit misst und mit steigender Temperatur ist der Arbeitshub bevorzugt verringerbar. Es ist bekannt, dass die Temperatur sehr eng mit der Viskosität korreliert. Bevorzugt wird in das Ventil mindestens ein Temperatursensor eingebracht, der die Temperatur der aufzutragenden viskosen Flüssigkeit direkt misst. Alternativ kann an das Gehäuse des Ventils oder in den Ventilkörper der Temperatursensor eingebracht werden, und somit die Gehäusetemperatur und damit indirekt die Temperatur der aufzutragenden viskosen Flüssigkeit erfassbar sein.

Die Temperatur der aufzutragenden viskosen Flüssigkeit, etwa Leimtemperatur bzw. die Ventiltemperatur, ist unter anderem von der Umgebungstemperatur, der Anzahl der Schaltzyklen des Ventils und der Durchflussmenge der aufzutragenden viskosen Flüssigkeit (Kühlung durch diese Flüssigkeit, insbesondere wenn Kaltleim aufgetragen wird) abhängig. Sie kann für jede Produktion unterschiedlich sein und sich auch während einer Produktion verändern. Ein Ventil und damit die aufzutragende viskose Flüssigkeit ist beispielsweise zu Produktionsbeginn kühler als nach einer gewissen Produktionszeit. Die Temperatur kann auch schlagartig absinken, wenn zum Beispiel in einen Flüssigkeitsvorratsbehälter in einer warmen Umgebung eine größere Menge kühlerer aufzutragender Flüssigkeit nachgefüllt wird, die zum Beispiel aus einem kühlen Lagerraum stammt.

Da die Temperatur stark mit der Viskosität und mit der Auftragsmenge korreliert ist, kann mit steigender Erwärmung die Hubregulierung mittels einer Regelung/Steuerung zudrehbar sein. Damit kann eine gleichmäßige Menge der aufzutragenden Flüssigkeit über den Produktionszyklus erreicht werden.

In einer bevorzugten Ausführungsform kann die Nachführung klebstofftyp- oder klebstoffabhängig erfolgen. Jeder Klebstoff variiert in gewissen Maßen bezüglich seiner Temperatur-/Viskositätskennlinie bzw. Temperatur-/Durchflusskennlinie. Sind diese Werte, wie bevorzugt, für eine Klebstoffart- oder sogar einen bestimmten Klebstofftyp in der Steuerung hinterlegt, kann die Nachführung mit einer höheren Präzision erfolgen. Diese Kennlinien können experimentell ermittelt werden, in dem zum Beispiel der Durchfluss bei einer Standardeinstellung der Hubregulierung in steigenden Abschnitten gemessen und mit der Temperatur korreliert bzw. die Kennlinie direkt daraus abgeleitet wird.

Alternativ oder ergänzend kann auch die Viskosität der aufzutragenden viskosen Flüssigkeit messbar sein. Die Regelung/Steuerung kann analog zu der beschriebenen Temperaturregelung erfolgen.

In dem Zulauf oder in dem Ventil selbst kann eine Durchflussmenge bestimmbar sein. Anhand der Durchflussmenge kann in Abgleich mit einem Sollwert die Durchflussmenge nachreguliert werden, indem die Hubjustierung auf- oder zudrehbar ist.

In der bevorzugten Ausführungsform ist kein Sensor in den Fluidkanal des Ventils integriert. Es hat sich gezeigt, dass eine derartige Integration sehr aufwändig ist. Zudem besteht der Trend, Auftragsventile, insbesondere Klebstoffventile, kleiner zu bauen, was eine starke Miniaturisierung der Sensoren zur Folge hat. Teilweise gibt es diese Sensoren in der erforderlichen Messgüte in der kleinen Bauform nicht. Bei Heißleimventilen ist ein solcher Einbau von Sensoren aufgrund der hohen Betriebstemperaturen oft gar nicht möglich.

Mit Vorteil ist der Stellmotor samt etwaiger Getriebeaufbauten nicht oder unwesentlich breiter, als das Ventil. Ventile werden häufig eng aneinander gestellt und gereiht, um den Abstand der Klebstoffreihen nicht zu groß zu wählen. Baut der Motor breiter, so sind größere Abstände zwischen den Ventilen die unerwünschte Folge.

Es kann eine Motorhalterung oder Motorbefestigung vorgesehen sein, die das Reaktions-Drehmoment des Stellmotors auf das Ventilgehäuse überträgt.

Der Motor und gegebenenfalls das Getriebe sind bevorzugt genauso breit, wie das jeweilige Ventil. Beispielhaft seien 20 bis 30 mm, je nach Ventiltyp, genannt. Aufgrund der Leistungsanforderungen kann der Motor, insbesondere beidseitig, breiter gewählt werden, vorzugsweise bis zu 20 %.

Dagegen kann der Motor in Längsrichtung größer bauen und in dieser Richtung weiter über das Ventil hinausragen. Etwas anderes gilt jedoch dann, wenn die Ventile quer eingebaut sind.

Je nach Ventiltyp und aufzutragender viskoser Flüssigkeit weist der Motor bevorzugt ein Drehmoment von etwa 0,1 bis 1,5 Nm auf. Hierdurch wird sichergestellt, dass auch Verkrustungen und Anhaftungen von Klebstoffpartikeln berücksichtigt sind, sodass ein Loslösen auch unter schwierigen Umständen möglich ist.

Der mindestens eine Motor kann während des Betriebs dauerbestromt sein, damit er seine Position hält. Der mindestens eine Motor kann auch nur während der Stellbewegung bestromt werden. In diesem Fall kann eine Motorbremse eingesetzt werden. Es hat sich jedoch gezeigt, dass in vielen Fällen eine etwa durch Federpakete und Reibung hervorgerufene Eigenhemmung des Ventils ausreichend ist.

Insbesondere in der Ausführungsform, in der die aufzutragende viskose Flüssigkeit Heißleim umfasst, ist der Motor bevorzugt von dem erhitzten Ventil thermisch isoliert. Dies kann durch eine verlängerte Motorspindel geschehen und/oder durch ein Hitzeschild und/oder durch eine Isolation des Ventils selbst.

Die Motorsteuerung kann zwischen der übergeordneten Steuerung des Systems und dem Stellmotor geschaltet sein. Die Motorsteuerung erhält bevorzugt von der übergeordneten Steuerung des Systems Stellbefehle, die von ihr umsetzbar sind. Die Motorsteuerung kann aber auch in die übergeordnete Steuerung des Systems integriert sein.

Die übergeordnete Steuerung des Systems kann eine Leimsteuerung umfassen oder durch eine Leimsteuerung gebildet sein.

Bevorzugt sind die Verfahrbewegungen des mindestens einen Stellmotors überwachbar. Erfolgt ein Verfahrbefehl und resultiert daraus keine Verfahrbewegung oder eine Verfahrbewegung nicht in dem gewünschten Maß, so kann an dem Bedienterminal eine Fehlermeldung ausgebbar sein. Es ist auch möglich, den Motor kurzzeitig überstrombar vorzusehen, denn es könnte ja sein, dass der Anker in einer Position festklebt (z. B. an der Anschlagfläche der Hubregulierung oder an der Düse).

Der mindestens eine Stellmotor kann eine Überlastschutzeinrichtung aufweisen. Löst eine solche Überlastschutzeinrichtung aus, ist bevorzugt eine Meldung an dem Bedienterminal (insbesondere der übergeordneten Steuerung des Systems) ausgebbar.

Es ist offensichtlich, dass die Antriebskraft des mindestens einen Stellmotors am größten sein muss, wenn der Anker sich am Anschlag (Nullposition) befindet und von dort fortbewegt werden muss. Denn das Verschlussorgan wird von der Düse umschlossen (hohe Reibung) und haftet dort (und etwa an der Hubjustierung) aufgrund von Klebstoffresten besonders häufig an. Zum Erzeugen eines Losbrechmoments kann der Motor in der Anfahrphase überbestrombar sein, gegebenenfalls über den Nennbetriebsstrom hinaus. Nach dem Losbrechen kann der Storm absenkbar sein. Dieses Steuerregime ist möglich, da die Verfahrbewegungen des Stellmotors selten stattfinden.

Bei dem erfindungsgemäßen Verfahren zur Steuer und/oder Regelung des Auftrags viskoser Flüssigkeiten auf ein Substrat kommt ein Auftragsventil, dessen Arbeitshub über eine Hubjustierung veränderbar ist, zum Einsatz. Die Hubjustierung des Ventils wird motorisch eingestellt.

Anders ausgedrückt wird die Hubjustierung des Ventils so ausgestaltet, dass sie motorisch verstellbar ist.

Der Stellmotor wird bevorzugt über eine Motorsteuerung angesteuert. Diese Motorsteuerung führt eine Positionssteuerung des Stellmotors bevorzugt aufgrund eines Positionierbefehls einer übergeordneten Steuerung aus. Mit der übergeordneten Steuerung wird bevorzugt auch die Steuerung des mindestens einen Auftragsventils bewirkt, beispielsweise wird die Öffnung dieses Ventils über diese Steuerung bewirkt. Bevorzugt kann der Benutzer an der Bedieneinheit der übergeordneten Steuerung eine Eingabe machen oder über Funktionstasten die Motoren ansteuern, um über den Stellmotor die Hubjustierung auf- und zuzudrehen und damit die Menge der aufgetragenen viskosen Flüssigkeit zu beeinflussen.

Mit Vorteil ist ein selbsttätiges oder auf Benutzeranforderung auslösbares Kalibrierverfahren vorgesehen. Dabei fährt der Motor bevorzugt bis an den Anschlag (Düsenöffnung innen). Über einen Anstieg der Stormaufnahme und/oder des Drehmoments wird bevorzugt von der Steuerung festgestellt, dass der Anschlag erreicht ist. Von dort fährt der Motor bevorzugt eine definierte Anzahl von Schritten *oder* einen bestimmten Drehwinkel in die entgegengesetzte Richtung. Es ist denkbar, dass der Motor von der dann erreichten Position erneut ein definiertes Stück in Richtung des Anschlags fährt, um das Gewindespiel zu kompensieren.

Das Kalibrierverfahren kann automatisch durchgeführt werden, *zyklisch oder* wenn eine Pause erkannt wird oder per Nutzerbefehl eine Pause der Steuerung angezeigt wird.

In einer Ausführungsform wird das Kalibrierungsverfahren gestartet, wenn eine dem Auftrag nachgeschaltete Qualitätssicherungseinrichtung (z. B. Sensoren, Kamera mit Bildverarbeitung) eine Abweichung über einen vorgegebenen Toleranzwert hinaus feststellen. In einer Ausführungsform wird während des Kalibrierungsverfahrens die übergeordnete Maschine gestoppt oder die Zufuhr neuer Produkte unterbunden, bis die Kalibrierung vollzogen ist.

Es kann auch während des Kalibrierungsverfahrens eine Ausschleusvorrichtung angesteuert werden, die automatisch Produkte aus dem Produktionsfluss ausschleust.

In einer bevorzugten Ausführungsform des erfindungsgemäßen Verfahrens wird in der übergeordneten Steuerung für jedes Ventil eine unterschiedliche Öffnungsposition, also eine unterschiedliche Arbeitsposition hinterlegt. Jedes Ventil fährt nach der Nullstellung (Anschlag) auf eine in der übergeordneten Steuerung hinterlegte Sollposition.

In einer weiteren Ausführungsform des Verfahrens werden diese Daten in einem Produktionsauftrag hinterlegt.

In der Software (insbesondere der übergeordneten Steuerung des Systems) können auch pro Ventil bestimmte Bereiche mit unterschiedlichen Auftragsmengen angelegt werden. Dadurch können, wie in einem Ausführungsbeispiel, in einem Punktbetrieb abschnittsweise unterschiedliche Punktgrößen aufgetragen werden.

In einer weiteren Ausführungsform des Verfahrens wird zu Reinigungszwecken nach einer entsprechenden Bedienereingabe die Hubregulierung des mindestens einen Ventils einmal oder mehrmals geöffnet und geschlossen. Dieses Reinigungsverfahren kann auch automatisch gestartet werden, wenn etwa ein ventilinterner Sensor (z. B. ein Durchflusssensor) oder eine externe Überwachungseinrichtung (z. B. eine Kamera) eine Abweichung erkennt. Die Reinigungsfunktion kann mit einem Spülvorgang kombiniert werden, um die gelösten Teile aus dem Ventil herauszuspülen. In einer Ausführungsform wird nach dem Reinigungsprogramm ein Testauftrag durchgeführt, um den Erfolg zu prüfen. Ist der Erfolg nicht ausreichend, so wird der Reinigungsvorgang in dieser Ausführungsform wiederholt. In einer Ausführungsform wird der Durchfluss gravimetrisch überprüft, indem z. B. in ein Dosiergefäß dosiert wird, das mit einer Präzisionswaage verbunden ist.

In einer Ausführungsform wird die letzte oder die letzten Arbeitspositionen und/oder Nullpositionen nach einem Neueinbau oder einer Überholung eines Ventils in der Steuerung gespeichert (z. B. als Winkelangabe, Potentiometerwert etc.). Mit Vorteil wird durch die Veränderung der Lage bei einer Neukalibrierung ein entstandener Verschleiß abgeschätzt. Vorzugsweise werden daraus Kennwerte für den Verschleiß bestimmt. Bevorzugt wird bei einer Überschreitung bestimmter Grenzwerte der Bediener auf eine notwendige Wartung hingewiesen. Mit Vorteil kann der Bediener zum Beispiel bei einem Austausch von Düse und Anker die Verschleißüberwachung wieder neu starten, z. B. durch Benutzereingabe an dem Bediengerät der Steuerung ("Nullung"). Alternativ kann die Steuerung durch die Veränderung der Kennwerte in die andere Richtung automatisch erkennen, dass eine Wartung vorgenommen wurde und die neuen Werte als Ausgangswert annehmen.

Bevorzugt wird nach Anwahl des Ventiltyps an der Bediensoftware automatisch die optimale Arbeitsposition dieses Ventils angefahren. In einer Ausführungsform erfolgt die Identifikation des Ventils durch einen an diesem befindlichen Identifikationschip und das Ventil wird nach seinem Einbau automatisch so angesteuert, dass seine Hubjustierung in die optimale Position fährt.

Mit Vorteil wird verhindert, dass ein Ventil aufgrund einer fehlerhaften Bedienereingabe in eine Arbeitsposition fährt, in der es nicht mehr stabil arbeitet. In einer Ausführungsform erfolgt dies dadurch, dass die Software dagegen verriegelt wird, dass diese kritischen Einstellungen angefahren werden. Diese untere Grenze kann für alle Ventile gleich oder alternativ ventilbezogen werden.

In einer Ausführungsform des erfindungsgemäßen Verfahrens wird der Auftrag der viskosen Flüssigkeit mit Sensoren (z. B. Infrarot- oder Mikrowellensensoren) oder mit Kameras überwacht. Mit Vorteil ist eine Sollvorgabe für einen Klebstoff- oder Flüssigkeitsauftrag von dem Bediener einstellbar. Diese Sollvorgabe wird bevorzugt mit einer Überwachungsvorrichtung erfasst und bei Abweichungen unterhalb oder oberhalb eines vorgegebenen Sollwerts wird der Auftrag über eine Regelung nachgeführt. Die Hubjustierung des Ventils wird bevorzugt solange motorisch nachgeführt, bis die gewünschte Auftragsmenge erreicht wird. Dies erfolgt in einer Ausführungsform iterativ oder/und über eine Berechnungsvorschrift (Kennlinie).

In einer Ausführungsform wird die Sollvorgabe nicht zwangsläufig als Menge eingegeben, sondern als Flächenangabe.

In einer Ausführungsform wird die Temperatur der aufzutragenden Flüssigkeit in dem Ventil mittels mindestens eines Temperatursensors gemessen. Alternativ kann auch die Gehäusetemperatur des Ventils mittels eines an dem Gehäuse angebrachten Temperatursensors gemessen werden.

Vorzugsweise wird mit steigender Erwärmung die Hubjustierung mittels einer Regelung bzw. Steuerung zugedreht.

In einer Ausführungsform sind die Werte der Beziehung zwischen der Temperatur und der Viskosität der aufzutragenden Flüssigkeit in der Steuerung hinterlegt und die Regelung erfolgt flüssigkeitstypabhängig. Die Kennlinien werden in einer Ausführungsform experimentell ermittelt, indem zum Beispiel der Durchfluss bei einer Standardeinstellung der Hubregulierung in steigenden Abschnitten gemessen wird und mit der Temperatur korreliert bzw. die Kennlinie direkt daraus abgeleitet wird.

In einer Ausführungsform wird die Viskosität der aufzutragenden Flüssigkeit im Ventil gemessen. Die Regelung erfolgt bevorzugt wie bei der Temperaturregelung beschrieben.

In einer Ausführungsform wird in dem Zulauf oder in dem Ventil selbst eine Durchflussmenge der aufzutragenden Flüssigkeit bestimmt. In dieser Ausführungsform wird anhand der Durchflussmenge bevorzugt in Abgleich mit einem Sollwert die Durchflussmenge nachreguliert, in dem die Hubjustierung auf- oder zugedreht wird.

In einer Ausführungsform wird der mindestens eine Stellmotor während des Betriebes dauerbestromt, damit er seine Position hält. In einer anderen Ausführungsform wird der Motor nur während der Stellbewegung bestromt. In diesem Fall kann eine Motorbremse eingesetzt werden.

In der Ausführungsform, in der Heißleim aufgetragen wird, wird der Motor bevorzugt thermisch von dem erhitzten Ventil isoliert.

Die Motorsteuerung (also insbesondere die Steuereinrichtung des Stellmotors) wird bevorzugt zwischen der Leimsteuerung und dem Motor geschaltet. Die Motorsteuerung erhält dann von der Leimsteuerung Stellbefehle, die von der separaten Motorsteuerung umgesetzt werden. In einer Ausführungsform wird die Motorsteuerung jedoch in die Leimsteuerung integriert.

Vorzugsweise wird die Verfahrbewegung des mindestens einen Stellmotors überwacht. Erfolgt ein Verfahrbefehl und resultiert daraus keine Verfahrbewegung oder eine Verfahrbewegung nicht in dem erwünschten Maß, so wird bevorzugt an dem Bedienterminal eine Fehlermeldung aufgegeben. Der Motor kann auch kurzzeitig überbestromt werden, denn es könnte ja sein, dass der Anker in einer Position festklebt.

In einer bevorzugten Ausführungsform, in der der Motor vor Überlast geschützt wird, wird eine Meldung an dem Bedienterminal aufgegeben, falls ein solcher Überlastschutz auslöst.

Zum Erzeugen eines Losbrechmoments wird der Motor in eine Ausführungsform in der Anfahrphase überbestromt, gegebenenfalls über den Nennbetriebsstrom hinaus. Nach dem Losbrechen wird der Storm bevorzugt abgesenkt.

Die Erfindung wird nun anhand zweier Ausführungsbeispiele näher erläutert. Es zeigen:
- Fig. 1: eine schematische Querschnittsdarstellung eines aus dem Stand der Technik bekannten Ventils;
- Fig. 2: eine Seitendarstellung eines Ventils eines erfindungsgemäßen Steuer- und/oder Regelsystems mit Stellmotor;
- Fig. 3: eine Seitendarstellung eines Ventils eines anderen Ausführungsbeispiels eines erfindungsgemäßen Steuer- und/oder Regelsystems mit Stellmotor;
- Fig. 4: eine schematische Darstellung eines ULT-Sensors;
- Fig. 5: eine schematische Darstellung einer Überwachungskamera;
- Fig. 6 bis 8: eine Darstellung eines Stellmotors in den drei Hauptansichten;
- Fig. 9: eine perspektivische Darstellung eines Stellmotors.

Bei allen in den Zeichnungen dargestellten Ventilen handelt es sich um Leimauftragsventile.

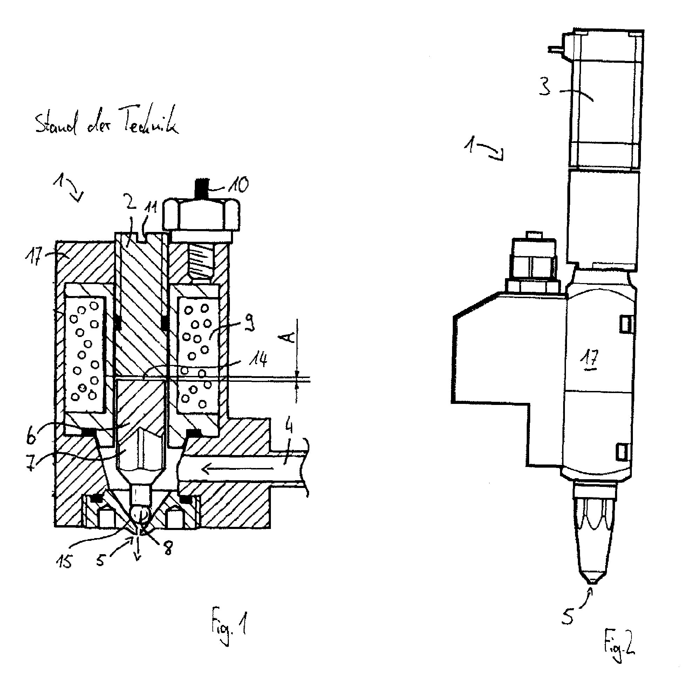

Fig. 1 zeigt ein beispielhaftes, aus dem Stand der Technik bekanntes, Auftragsventil 1. Der Leim tritt durch eine Zufuhrleitung 4 mit Druck beaufschlagt in das Ventil 1 ein. Bei der in Fig. 1 gezeigten Nullstellung des Verschlussorgans 6, kann der Leim nicht durch die Austrittsöffnung 5 austreten, da diese Öffnung durch das Verschlussorgan 6, das einen Anker 7 mit einer an dessen Spitze angeordneten Kugelnadel 8 umfasst, verschlossen ist. Die Kugelnadel 8 dichtet in dieser Position des Verschlussorgans 6 mit dem Nadelsitz 15 des Ventils ab. Um das Ventil 1 zu öffnen, muss der Anker 7 in der Darstellung der Fig. 1 nach oben bewegt werden. Dies geschieht mithilfe eines Elektromagneten 9, der über den elektrischen Anschluss 10 aktivierbar ist. Die den Anker 7 (in Fig. 1 nach unten) zurückstellenden Mittel sind nicht dargestellt. Hierbei kann es sich um eine Feder oder um Permanentmagneten handeln.

Der Anker 7 ist nur so weit nach oben bewegbar, bis er an die Hubjustierung 2 anschlägt. Der Luftspalt 14 zwischen Anker 7 und Hubjustierung 2 bestimmt den Arbeitshub A. Die Hubjustierung 2 ist in das Ventilgehäuse 17 eingeschraubt. Über die Schlüsselfläche 11 kann sie mittels eines Drehwerkzeugs (nicht dargestellt) manuell eingestellt werden. Je weiter die Hubjustierung 2 nach oben geschraubt wird, desto weiter kann sich der Anker 7 und mit ihm die Kugelnadel 8 in einer Öffnungsphase des Ventils nach oben bewegen und desto mehr Leim kann in einer Öffnungsphase des Ventils austreten. Entsprechendes gilt umgekehrt.

Fig. 2 zeigt ein Ventil 1 eines Ausführungsbeispiels eines erfindungsgemäßen Steuer- und/oder Regelsystems für den Auftrag viskoser Flüssigkeiten. Das Verschlussorgan 6 und die Hubjustierung 2 kann wie bei dem in Fig. 1 dargestellten Ventil ausgestaltet sein. Es ist ein Stellmotor 3 gezeigt, mittels dessen die Hubjustierung 2 motorisch einstellbar ist. Bei dem in Fig. 2 gezeigten Ventil kann es sich um ein elektrisches Kaltleimventil für Punkt- und Strichauftrag handeln.

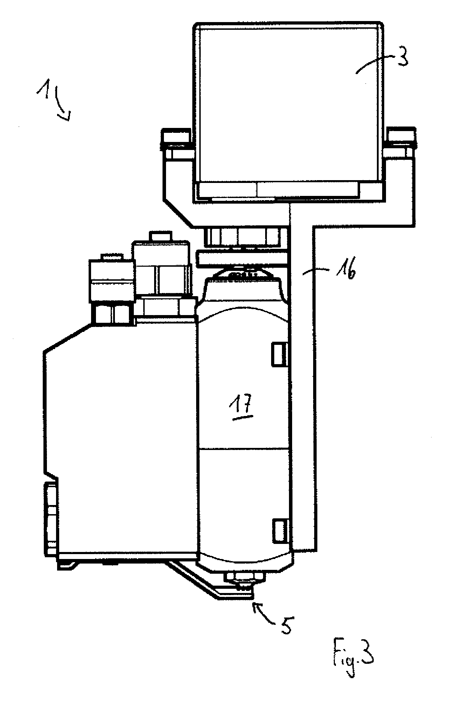

Fig. 3 zeigt ein anderes Ventil, bei dem es sich um ein Ventil zum kontaktlosen Auftrag von Leimpunkten handeln kann, mit einem verglichen mit dem in Fig. 2 gezeigten Stellmotor anderen Motortyp. Auch die in Fig. 3 nicht erkennbare Hubjustierung 2 des dort gezeigten Ventils 1 ist mittels des Stellmotors 3 motorisch verstellbar. Fig. 3 zeigt eine Motorhalterung 16, die das Reaktionsdrehmoment des Stellmotors 3 in das Ventilgehäuse 17 einleitet.

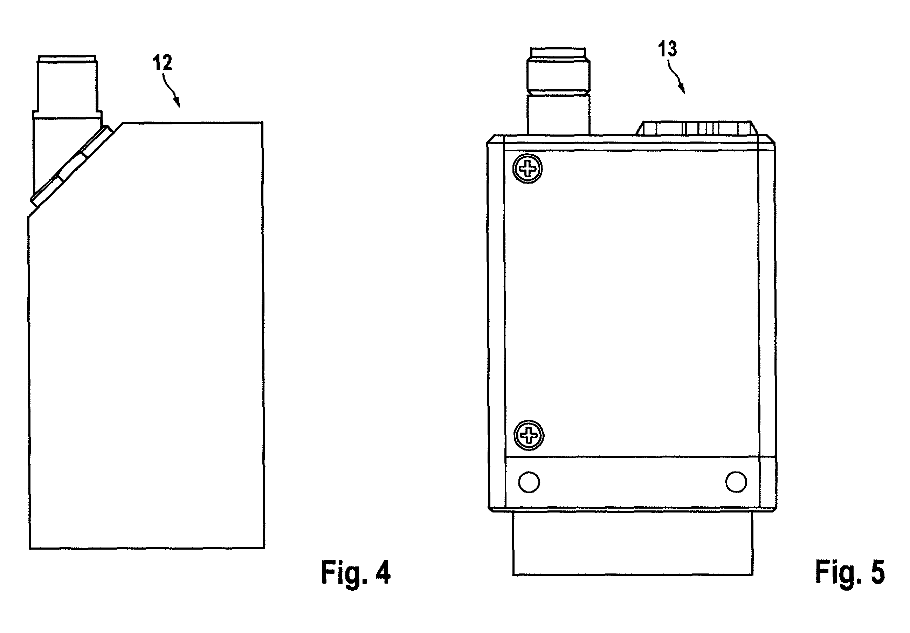

Fig. 4 zeigt eine Schemazeichnung eines ULT-Sensors 12, dessen Messprinzip die Infrarotmessung ist. Die Darstellung steht symbolisch für verschiedene Sensortypen.

In Fig. 5 ist schematisch eine Überwachungskamera 13 gezeigt.

Die in den Figuren 4 und 5 gezeigten Sensoren können den Auftrag überwachen und in einen Regelkreis zur Regelung des Auftrags eingebunden sein.

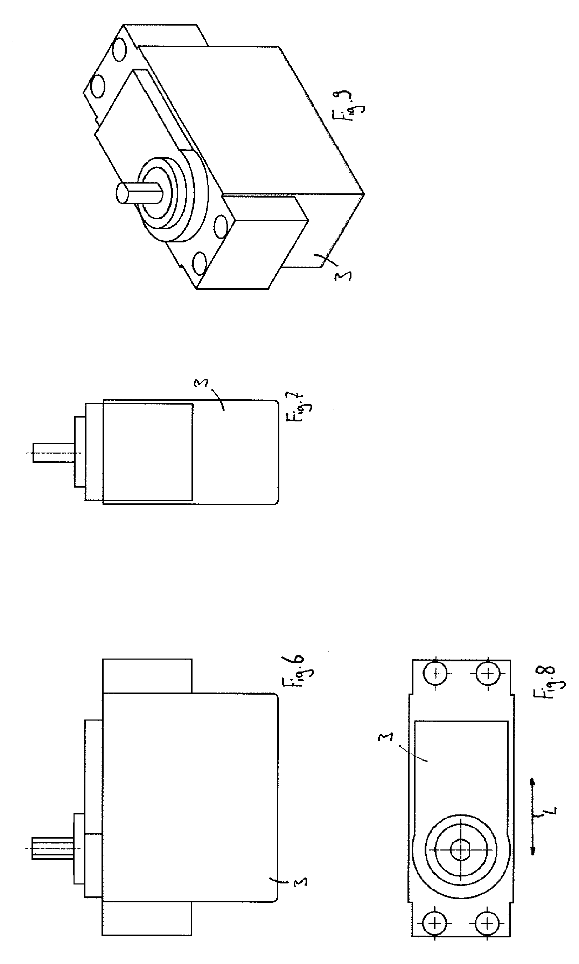

Figuren 6 bis 9 zeigen einen Stellmotor 3 eines weiteren Ausführungsbeispiels eines erfindungsgemäßen Steuer- und/oder Regelsystems für den Auftrag viskoser Flüssigkeiten. Dieser weist einen Überlastungsschutz auf. Der Pfeil L in der die Draufsicht zeigenden Fig. 8 zeigt die Längsrichtung des Stellmotors 3.

### Bezugszeichenliste:

- 1: Auftragsventil
- 2: Hubjustierung
- 3: Stellmotor
- 4: Leimzufuhr
- 5: Austrittsöffnung
- 6: Verschlussorgan
- 7: Anker
- 8: Kugelnadel
- 9: Elektromagnet
- 10: Elektrischer Anschluss
- 11: Schlüsselfläche
- 12: ULT-Sensor
- 13: Überwachungskamera
- 14: Luftspalt zwischen Anker und Hubjustierung
- 15: Nadelsitz
- 16: Motorhalterung
- 17: Gehäuse des Ventils

- A: Arbeitshub
- L: Längsrichtung

## Patentansprüche

1. Steuer- und/oder Regelsystem für den Auftrag viskoser Flüssigkeiten auf ein Substrat mit mindestens einem Auftragsventil (1), mit einem Verschlussorgan (6), das einen Arbeitshub (A) zwischen einer Nullposition und einer Arbeitsposition vollzieht, der über eine Hubjustierung (2) veränderbar ist, wobei ein Stellmotor (3) vorgesehen ist, zur motorischen Einstellung dieser Hubjustierung (2).

2. System nach Anspruch 1, **dadurch gekennzeichnet, dass** eine Steuereinrichtung des Stellmotors (3) der Hubjustierung vorgesehen ist und eine übergeordnete Steuerung des Systems und das eine Einstellung der Hubjustierung (2) durch die Steuereinrichtung des Stellmotors (3) der Hubjustierung aufgrund eines Positionierbefehls der übergeordneten Steuerung ausführbar ist.

3. System nach Anspruch 1 oder 2, **dadurch gekennzeichnet, dass** eine Arbeitshub-Kalibrierfunktion vorgesehen ist, bei der der Stellmotor (3) in eine Richtung bis an eine Endposition fahrbar ist, in der das Ventil (1) geschlossen und verriegelt ist und von dieser Position ein definiertes Stück in die entgegengesetzte Richtung.

4. System nach Anspruch 2 oder 3, **dadurch gekennzeichnet, dass** in der übergeordneten Steuerung für jedes Ventil (1) ein individueller Wert für den Arbeitshub (A) hinterlegbar ist.

5. System nach einem der Ansprüche 1 bis 4, **dadurch gekennzeichnet, dass** für jedes Ventil (1) für unterschiedliche Substratbereiche unterschiedliche Werte für den Arbeitshub (A) hinterlegbar sind.

6. System nach einem der Ansprüche 1 bis 5, **dadurch gekennzeichnet, dass** eine Verschleißüberwachungs-Funktion vorgesehen ist, bei der nach einem Neueinbau oder einer Oberholung des Ventils (1) die letzte Arbeitsposition und/oder Nullposition in der Steuerung speicherbar ist und durch die Veränderung der Lagen ein entstandener Verschleiß bei einer Neukalibrierung abschätzbar ist.

7. System nach einem der Ansprüche 1 bis 6, **dadurch gekennzeichnet, dass** eine Bediensofortware vorgesehen ist und in der Bediensoftware für mehrere Ventiltypen jeweils eine Untergrenze für die Arbeitsposition hinterlegbar ist oder für alle Ventiltypen genau eine Untergrenze für die Arbeitsposition hinterlegbar ist und Mittel vorgesehen sind, die das Unterschreiten dieser Grenze verhindern.

8. System nach einem der Ansprüche 1 bis 7, **dadurch gekennzeichnet, dass** ein Regelkreis zur Regelung des Auftrags vorgesehen ist und das System Sensoren (12, 13) zur Überwachung des Auftrags umfasst und die Stellung der Hubjustierung (2) eine Stellgröße des Regelkreises zur Regelung des Auftrags ist.

9. System nach einem der Ansprüche 1 bis 8, **dadurch gekennzeichnet, dass** der Stellmotor (3) samt etwaiger Getriebeaufbauten nicht oder nur unwesentlich breiter ist, als das Ventil (1).

10. Verfahren zur Steuerung und/oder Regelung des Auftrags viskoser Flüssigkeiten auf ein Substrat mit mindestens einem Auftragsventil (1), dessen Arbeitshub über eine Hubjustierung (2) veränderbar ist, wobei die Hubjustierung (2) des Ventils (1) motorisch eingestellt wird.
